Europäisches Patentamt

European Patent Office

Office européen des brevets

(19)

(11) **EP 1 062 106 B1**

(12) **FASCICULE DE BREVET EUROPEEN**

(45) Date de publication et mention
de la délivrance du brevet:
**17.07.2002 Bulletin 2002/29**

(21) Numéro de dépôt: **99934199.3**

(22) Date de dépôt: **02.02.1999**

(51) Int Cl.$^7$: **B60C 9/18**

(86) Numéro de dépôt international:
**PCT/EP99/00652**

(87) Numéro de publication internationale:
**WO 99/39927 (12.08.1999 Gazette 1999/32)**

(54) **PNEUMATIQUE A ARMATURE DE SOMMET TRIANGULEE**

REIFEN MIT TRIANGULIERTEM VERSTÄRKUNGSGÜRTEL

TYRE WITH FACED TOP PLY REINFORCEMENT

(84) Etats contractants désignés:
**DE ES FR GB IT**

(30) Priorité: **05.02.1998 FR 9801454**

(43) Date de publication de la demande:
**27.12.2000 Bulletin 2000/52**

(73) Titulaire: **Compagnie Generale Des
Etablissements Michelin-Michelin & Cie
63040 Clermont-Ferrand Cédex 09 (FR)**

(72) Inventeur: **BONDU, Lucien
63800 La Roche Noire (FR)**

(74) Mandataire: **Le Cam, Stéphane et al
Michelin & Cie,
Service SGD/LG/PI Ladoux
63040 Clermont-Ferrand Cedex 09 (FR)**

(56) Documents cités:
EP-A- 0 785 095          FR-A- 1 389 428
FR-A- 2 222 232          FR-A- 2 671 516
US-A- 4 696 335

• DATABASE WPI Week 9242 Derwent
Publications Ltd., London, GB; AN 92-346504
XP002081857 & JP 04 252705 A (YOKOHAMA
RUBBER CO. LTD.), 8 septembre 1992

**Description**

La présente invention concerne un pneumatique à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

L'armature de carcasse est ancrée de part et d'autre à au moins une tringle de bourrelet et est surmontée radialement par une armature de sommet constituée d'au moins deux nappes dites de travail, superposées et formées de fils ou câbles parallèles dans chaque nappe et croisés d'une nappe à la suivante en faisant avec la direction circonférentielle du pneumatique des angles au plus égaux à 45° en valeur absolue. Elle comprend aussi généralement une nappe de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail. La nappe de triangulation forme avec les deux nappes de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des renforcements dans la zone du sommet du pneumatique.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre; par contre l'endurance de ce dernier et en particulier de l'armature de sommet est fortement pénalisée.

Les contraintes existantes au niveau de l'armature de sommet et plus particulièrement les contraintes de cisaillement entre les deux nappes de sommet de travail, alliées à une élévation non négligeable de la température de fonctionnement au niveau des extrémités de la nappe de travail la plus courte, ont pour conséquence l'apparition et la propagation de fissures de la gomme au niveau desdites extrémités, et ceci malgré la présence à la jonction des bords de nappes de sommet de travail d'une couche de caoutchouc épaissie. Le même problème existe dans le cas de bords de deux nappes à éléments de renforcement, croisés d'une nappe à l'autre nappe, ladite autre nappe n'étant pas obligatoirement radialement adjacente à la première.

Afin de remédier aux inconvénients ci-dessus et d'améliorer l'endurance de l'armature de sommet du type de pneumatique étudié, un certain nombre de brevets antérieurs revendique des solutions relatives à la structure et qualité des couches et/ou profilés de mélanges caoutchouteux qui sont disposés entre et/ou autour des extrémités de nappes de travail et plus particulièrement des extrémités de la nappe de travail la plus courte.

Le brevet FR 1 389 428, pour améliorer la résistance à la dégradation des mélanges de caoutchouc situés au voisinage des bords d'armature de sommet, préconise l'utilisation, en combinaison avec une bande de roulement de faible hystérésis, d'un profilé de caoutchouc couvrant au moins les côtés et les bords marginaux de l'armature de sommet et constitué d'un mélange caoutchouteux à faible hystérésis.

Le brevet FR 2 222 232, pour éviter les séparations entre nappes d'armature de sommet, enseigne d'enrober les extrémités de l'armature dans un matelas de caoutchouc, dont la dureté Shore A est différente de celle de la bande de roulement surmontant ladite armature, et plus grande que la dureté Shore A du profilé de mélange caoutchouteux disposé entre les bords de nappes d'armature de sommet et armature de carcasse.

Le brevet US 5 154 217 utilise une unité de mesure différente et revendique de disposer entre les extrémités de deux nappes, dans le prolongement de la nappe comprise entre lesdites deux nappes, un coussin de mélange caoutchouteux dont le module d'élasticité à 100% d'allongement est supérieur au module du même nom de la bande de roulement.

Pour assurer la jonction des deux bords respectifs de deux nappes d'armature de sommet, le brevet FR 2 298 448 l'utilisation de gommes dites de cisaillement, entre les dits bords, de dureté Shore A et de module d'élasticité à 100% élevés, utilisation combinée à l'emploi de bandes de caoutchouc anisotrope disposées entre les bords de l'armature de sommet et l'armature de carcasse.

Il en est de même dans le cas de la jonction des nappes d'armature de sommet décrites dans le brevet FR 2 499 912, la partie latérale de la couche de caoutchouc disposée entre les deux nappes principales de l'armature de sommet étant constituée d'un mélange caoutchouteux de dureté Shore élevée.

D'autres solutions ont été envisagées pour améliorer la résistance à la séparation des nappes d'armature de sommet, solutions consistant à enrober au moins l'extrémité de la nappe axialement la moins large dans au moins une couche de mélange caoutchouteux renforcée ou non par des éléments de renforcement. Dans le cas d'une seule couche, cette dernière est avantageusement retournée sur l'extrémité de la nappe , comme, par exemple, décrit et montré sur le document FR 1 226 595, où la couche est renforcée par des fils métalliques très fins, ou sur le document JP 266 703, la couche de protection étant uniquement constituée de caoutchouc à fort module d'élasticité, ou encore sur le brevet FR 2 671 516.

La demande européenne EP 0 785 095 A1 correspondant au préambule de la revendication 1, concerne un pneumatique pour véhicules lourds et plus particulièrement une armature de sommet pour un tel pneumatique, formée d'au moins trois nappes, deux des dites nappes étant composées d'éléments croisés. Ladite demande enseigne de munir les bords de la nappe de sommet la plus courte d'une gomme de bordure dont le module de tension à 100% d'allongement relatif est plus grand que celui du mélange d'enrobage des éléments de renforcement, alors que la couche de mélange caoutchouteux disposée entre les bords de nappes a un module plus faible que le module dudit mélange d'enrobage.

Les différentes structures énumérées ci-dessus ne procuraient pas une solution totalement satisfaisante dans des conditions de roulage fortement pénalisantes pour le pneumatique.

Conformément à l'invention, le pneumatique à armature de carcasse radiale, ancrée dans chaque bourrelet à au moins une tringle, et surmontée d'une armature de sommet comprenant au moins deux nappes d'éléments de renforcement, parallèles entre eux dans chaque nappe et croisés d'une nappe à la suivante, les dites deux nappes ayant de largeurs axiales inégales, chaque bord de la nappe axialement la moins large d'au moins un couple de nappes croisées étant séparé de la nappe axialement la plus large du même couple par un profilé P de mélange caoutchouteux, dont l'extrémité axialement extérieure est située à une distance du plan équatorial du pneumatique au moins égale à la distance séparant dudit plan l'extrémité de la nappe la plus large, ledit profilé P étant lui-même séparé du calandrage C de la nappe la moins large par une gomme de bordure G, dont l'extrémité axialement extérieure est située à une distance dudit plan au moins égale à la demi-largeur de la nappe la moins large, est caractérisé en ce que ledit profilé P, ladite gomme de bordure G et ledit calandrage C ayant respectivement des modules sécants d'élasticité sous tension à 10% d'allongement relatif MP, MG, MC de sorte que MC $\geq$ MG > MP, l'épaisseur de la gomme G de bordure étant au moins égale à 15% de l'épaisseur globale de mélange caoutchouteux entre génératrices de câbles respectivement des deux nappes.

La gomme de bordure G aura son extrémité axialement intérieure située préférentiellement à une distance du plan équatorial au plus égale à la distance séparant dudit plan l'extrémité axialement intérieure dudit profilé P.

Ladite gomme de bordure G peut être retournée sur le bord de la nappe de sommet la moins large des deux nappes croisées considérées, de manière à enrober totalement les extrémités des éléments de renforcement formant ladite nappe d'armature de sommet la moins large.

L'épaisseur du profilé P, mesurée à l'extrémité de la nappe la moins large des deux nappes considérées sera préférentiellement comprise entre 30% et 80% de l'épaisseur globale de mélange caoutchouteux entre génératrices de câbles respectivement des deux nappes : une épaisseur inférieure à 30% ne permettant pas d'obtenir des résultats probants, et une épaisseur supérieure à 80% étant inutile vis à vis de l'amélioration à la résistance à la séparation entre nappes et désavantageux du point de vue coût.

Les caractéristiques de l'invention seront mieux comprises à l'aide de la description qui suit et qui se réfère au dessin, illustrant à titre non limitatif des exemples d'exécution, et sur lequel

- la figure 1 représente schématiquement un sommet de pneumatique conforme à l'invention, et
- la figure 2 est une vue agrandie des bords des nappes de l'armature de sommet selon une deuxième variante de l'invention.

Le pneumatique, conforme à l'invention et de dimension 385/65 R 22.5 a un rapport de forme H/S sensiblement égal à 0,65, H étant la hauteur du pneumatique sur jante et S la largeur axiale maximale dudit pneumatique monté sur sa jante de service 11.75 x 22.5 et gonflé à une pression recommandée de 9 bars.

Ledit pneumatique comprend principalement une armature de carcasse formée, dans le cas décrit, d'une seule nappe (1) de câbles métalliques en acier, susceptibles de résister à une force de tension très nettement supérieure à la force de tension générée par la pression de gonflage du pneumatique. Cette nappe de carcasse (1), isolée du gaz de gonflage par les couches de caoutchouc intérieures, comme connu en soi, est ancrée dans chaque bourrelet à au moins une tringle (non montrée) et surmontée radialement à l'extérieur par une armature de sommet (3). Ladite armature de sommet (3) est constituée, en allant radialement de l'intérieur à l'extérieur, d'une nappe (31) dite de triangulation et formée de câbles métalliques en acier inextensibles faisant avec la direction circonférentielle du pneumatique un angle pouvant être compris 50° et 90°, dans le cas étudié égal à 50° et dit orienté à droite. Ladite nappe (31) a une largeur axiale $L_{31}$ de 270 mm. La nappe (31) est radialement surmontée par la première nappe de travail (32), formée de câbles métalliques en acier inextensibles, lui permettant d'avoir une rigidité à l'extension par unité de largeur, perpendiculairement à la direction des câbles, au moins égale à la rigidité de même nom de la nappe (31), les dits câbles faisant avec la direction circonférentielle un angle de 18°, dit orienté à droite, c'est-à-dire la même orientation que les câbles de la nappe (31). La nappe (32) a une largeur $L_{32}$, égale à 280 mm et telle que ses extrémités soient plus éloignées du plan équatorial que les extrémités de la nappe (31).

La première nappe sommet de travail (32) est elle-même surmontée radialement à l'extérieur d'une deuxième nappe de travail (33), formée des mêmes câbles métalliques en acier que ceux de la nappe de travail (32) et ayant en conséquence la même rigidité d'extension par unité de largeur, lesdits câbles faisant avec la direction circonférentielle un angle de 18°, dit orienté à gauche, les câbles de cette deuxième nappe de travail étant croisés avec les câbles de la première nappe de travail. La largeur $L_{33}$ de la deuxième nappe de travail radialement extérieure (33), est égale à 260 mm, est inférieure à la largeur $L_{32}$ de 20 mm, d'où une distance axiale de 10 mm séparant chaque extrémité de la première nappe (32) de chaque extrémité de la deuxième nappe (33).

Les deux nappes de travail (32) et (33) ont respectivement des calandrages $C_1$ et $C_2$ constitués du même mélange caoutchouteux.

La nappe dite de protection (34) complète l'armature de sommet. Composée de câbles métalliques dits élastiques, c'est-à-dire présentant sous une force égale à 10% de la charge de rupture un allongement relatif au moins égal à 2%, (alors qu'un allongement inférieur à 2% est la caractéristique d'un câble inextensible) et faisant avec la direction circonférentielle un angle de 18°, égal à l'angle que font les câbles de la deuxième nappe de travail (33), et orienté dans la même direction que la direction suivie par les câbles de la deuxième nappe de travail (33), la nappe (34) ayant une largeur $L_{34}$ égale à 212 mm, c'est-à-dire inférieure à $L_{33}$ et $L_{32}$.

Le pneumatique est complété par une bande de roulement (2), réunie aux bourrelets du pneumatique par des flancs (3).

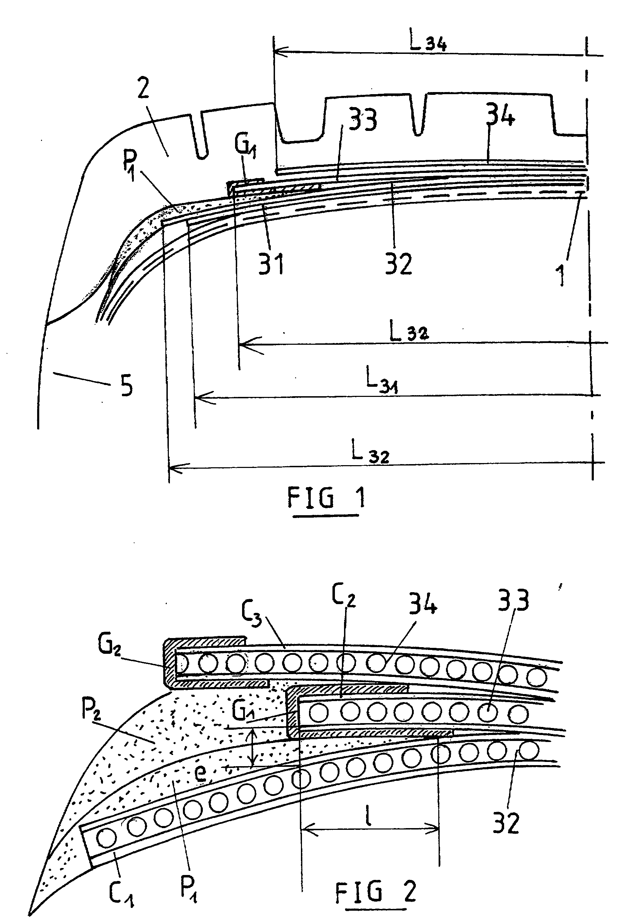

Entre la première nappe de travail (32), axialement la plus large des deux, et la deuxième nappe de travail (33), axialement la moins large, se trouve un profilé de mélange caoutchouteux $P_1$, de forme triangulaire et disposé de manière qu'il soit inséré entre les bords desdites nappes de travail sur une largeur axiale l correspondant à une valeur comprise entre 5% et 10% de la largeur $L_{33}$ de la nappe de travail (33) la plus courte. Ladite nappe la moins large (33) a chacune de ses extrémités recouverte d'une gomme de bordure $G_1$, ladite gomme étant retournée sur l'extrémité de nappe de manière à recouvrir radialement au-dessus et radialement au-dessous le bord de la dite nappe, l'extrémité axialement intérieure du brin de la gomme de bordure radialement au-dessous de la nappe (33) étant située à une distance du plan équatorial légèrement inférieure à la distance séparant dudit plan l'extrémité axialement intérieure du profilé $P_1$, et l'extrémité axialement intérieure du brin de la gomme de bordure radialement au-dessus de la nappe (33) étant située à une distance du plan équatorial légèrement inférieure à la distance axiale séparant l'extrémité du brin au-dessous de ladite nappe. L'épaisseur du profilé $P_1$ (apparaissant plus clairement sur la figure 2), mesurée au droit de l'extrémité de la nappe (33) est égale à 1,25 mm, soit 36% de l'épaisseur totale e de gomme séparant les câbles respectivement des deux nappes (32) et (33), ladite épaisseur étant mesurée entre les génératrices de câbles et à ladite extrémité de nappe la moins large. L'épaisseur de la gomme de bordure $G_1$ est égale, dans le cas décrit à 1,2 mm, et les modules sécants d'élasticité sous effort de tension à 10% d'allongement relatif $MC_2$, $MG_1$, $MP_1$ respectivement du calandrage $C_2$ de la nappe (33), de la gomme

de bordure $G_1$, du profilé $P_1$ sont égaux à 11 MPa, 9 MPa, 3 MPa, et répondent à la formule

$$MC_2 \geq MG_1 > MP_1$$

L'armature de sommet montrée sur la figure 2 diffère de celle de la figure 1 par le fait que la nappe de protection (34) a une largeur axiale $L_{34}$ de 260 mm et qu'elle est formée de câbles faisant avec la direction circonférentielle un angle de 26° orienté de la même façon que ceux de la nappe (33), et que la largeur $L_{33}$ de la nappe de travail (33) est égale à 212 mm. Il en résulte que nous sommes en présence de deux couples de nappes de câbles croisés d'une nappe à la suivante :

un premier couple formé par les nappes (32) et (33) avec la nappe (33) comme étant la moins large, et le couple formé par les nappes (32) et (34) avec la nappe (34) comme étant la moins large. Bien que la jonction entre les nappes (33) et (34) soit moins pénalisée du point de vue séparation inter-nappes, la solution optimale consiste, conformément à l'invention, à disposer radialement à l'intérieur de chaque nappe, considérée comme la moins large, c'est-à-dire des nappes (33) et (34), une gomme de bordure $G_1$, sous la nappe (33), et $G_2$ sous la nappe (34), les profilés $P_1$ d'une part assurant la liaison avec le calandrage $C_1$ de la nappe (32) axialement la plus large, et $P_2$ d'autre part la liaison avec le profilé $P_1$ lui même lié au calandrage $C_1$ de la nappe (32). Dans le cas décrit, la gomme de bordure $G_1$ est retournée sur le bord de la nappe de travail (33), il en est de même de la gomme de bordure $G_2$ qui est retournée sur le bord de la nappe (34). Quant aux modules sécants d'élasticité respectivement des gommes de bordure, des profilés et des calandrages de nappes, ils répondent aux inégalités suivantes :

$$MC_2 \geq MG_1 > MP_1 \text{ et } MC_3 \geq MG_2 > MP_2,$$

si l'on appelle $C_1$ le calandrage de la nappe (32), $C_2$ le calandrage de la nappe (33) et $C_3$ le calandrage de la nappe (34). Les calandrages $C_1$ et $C_2$ sont, dans l'exemple étudié, de même constitution et ont les mêmes propriétés ; il en est de même des deux gommes de bordure $G_1$ et $G_2$ qui ne sont pas différentes entre elles du point de vue constitution et propriétés ; les deux profilés $P_1$ et $P_2$ sont aussi constitués d'un même mélange caoutchouteux. Il est bien entendu que les calandrages peuvent être différents entre eux, que les gommes de bordure peuvent être différentes entre elles et que les profilés peuvent l'être tout autant, dans la mesure où leurs modules sécants d'élasticité sous tension répondent à la relation ci-dessus. Comme dans le cas de la figure 1, l'extrémité axialement intérieure du brin de la gomme de bordure $G_1$ entourant l'extrémité de la nappe (33) est légèrement plus éloignée du plan équatorial que l'extrémité du brin radialement intérieur de la dite gomme $G_1$. Quant à l'extrémité du brin radialement inférieur de la gomme de bordure $G_2$, elle peut être soit plus proche du plan équatorial que l'extrémité axialement intérieure du brin radialement supérieure de la gomme $G_1$, soit, au contraire plus éloigné. La position de l'extrémité axialement intérieure du brin radialement supérieure de la gomme $G_2$ est sans importance dans le mesure où le recouvrement de l'extrémité de la nappe (34) est assuré.

Des pneumatiques correspondant à la structure décrite conformément à la figure 1 ont été comparés à des pneumatiques dont l'armature de sommet était composée des mêmes nappes de sommet, mais avec des bords de nappes de travail (32) et (33) séparés par de simples profilés de mélange caoutchouteux dont le module d'élasticité à 10% est légèrement inférieur au module de même nom du calandrage identique pour les deux nappes, et les bords de nappes (33) et (34) séparés par la simple couche de gomme formée par les deux épaisseurs de calandrage identique respectivement des nappes (33) et (34). Les roulages comparatifs des pneumatiques considérés donnent un avantage moyen de 20% en kilomètres parcourus sur circuit autoroutier, c'est-à-dire un circuit où le pourcentage de lignes droites parcouru est très important, et le même avantage de 20% en kilomètres parcourus sur un circuit dit à forte dérive, c'est-à-dire un circuit où le pourcentage de courbes est le plus important, les conditions de charge et de pression de gonflage étant les mêmes pour les deus roulages et celles recommandées par les manufacturiers de pneumatiques

## Revendications

1. Pneumatique à armature de carcasse radiale (1), ancrée dans chaque bourrelet à au moins une tringle, et surmontée d'une armature de sommet comprenant au moins deux nappes (32) et (33) d'éléments de renforcement, parallèles entre eux dans chaque nappe et croisés d'une nappe (32) à la suivante (33), les dits deux nappes (32, 33) ayant de largeurs axiales inégales, chaque bord de la nappe axialement la moins large (33) d'au moins un couple (32,33) de nappes croisées étant séparé de la nappe axialement la plus large (32) du même couple par un profilé $P_1$ de mélange caoutchouteux, dont l'extrémité axialement extérieure est située à une distance du plan équatorial du pneumatique au moins égale à la distance séparant dudit plan l'extrémité de la nappe la plus large (32), ledit profilé $P_1$ étant lui-même séparé du calandrage $C_2$ de la nappe la moins large (33) par une gomme de bordure $G_1$ dont l'extrémité axialement extérieure est située à une distance dudit plan au moins égale à la demi-largeur de la nappe la moins large (33), **caractérisé en ce que** ledit profilé $P_1$, ladite gomme de bordure $G_1$ et ledit calandrage $C_2$ ont respectivement des modules sécants d'élasticité sous tension à 10% d'allongement relatif $MP_1$, $MG_1$, $MC_2$ de sorte que $MC_2 \geq MG_1 > MP_1$; l'épaisseur de la gomme de bordure $G_1$ étant au moins égale à 15% de l'épaisseur globale de mélange caoutchouteux entre génératrices de câbles respectivement des deux nappes (32, 33).

2. Pneumatique selon la revendication 1, **caractérisée en ce que** la gomme de bordure $G_1$ aura son extrémité axialement intérieure située préférentiellement à une distance du plan équatorial au plus égale à la distance séparant dudit plan l'extrémité axialement intérieure dudit profilé $P_1$.

3. Pneumatique selon la revendication 1, **caractérisé en ce que** la gomme de bordure $G_1$ est retournée sur le bord de la nappe de sommet la moins large (33) de manière à enrober totalement les extrémités d'éléments de renforcement formant ladite nappe.

4. Pneumatique selon l'une des revendications 1 à 3, **caractérisé en ce que** l'épaisseur du profilé $P_1$, mesurée à l'extrémité de la nappe la moins large (33) est comprise entre 30 et 80% de l'épaisseur globale de mélange caoutchouteux entre génératrices de câbles respectivement des deux nappes (32,33).

## Patentansprüche

1. Reifen mit radialer Karkassenbewehrung (1), die in jedem Wulst an mindestens einem Wulstkern verankert ist und von einer Scheitelbewehrung überdeckt ist, die mindestens zwei Lagen (32) und (33) aus Verstärkungselementen aufweist, die in jeder Lage zueinander parallel verlaufen und von einer Lage (32) zur folgenden (33) überkreuz laufen, wobei die genannten zwei Lagen (32, 33) ungleiche axiale Breiten aufweisen und jeder Rand der axial am wenigsten breiten Lage (33) mindestens eines Paares (32, 33) überkreuz laufender Lagen von der axial breitesten Lage (32) desselben Paares durch ein Profil $P_1$ aus gummihaltiger Mischung getrennt ist, dessen axial äußeres Ende in einem Abstand zur Äquatorialebene des Reifens gelegen ist, der mindestens gleich ist dem Abstand, der das Ende der breitesten Lage (32) von der genannten Ebene trennt, und wobei das genannte Profil $P_1$ seinerseits von der Kalandrierung $C_2$ der am wenigsten breiten Lage (33) durch eine Gummieinfassung $G_1$ ge-

trennt ist, deren axial äußeres Ende in einem Abstand zur genannten Ebene gelegen ist, der mindestens gleich ist der halben Breite der am wenigsten breiten Lage (33), **dadurch gekennzeichnet, daß** das genannte Profil $P_1$, die genannte Gummieinfassung $G_1$ und die genannte Kalandrierung $C_2$ jeweils Elastizitäts-Sekantenmoduln unter Zugspannung bei 10% relativer Dehnung $MP_1$, $MG_1$, $MC_2$ derart haben, daß $MC_2 \geq MG_1 > MP_1$; wobei die Dicke der Gummieinfassung $G_1$ mindestens 15% der Gesamtdicke der gummihaltigen Mischung zwischen Erzeugenden von Seilen jeweils der beiden Lagen (32, 33) ist.

2. Reifen nach Anspruch 1, **dadurch gekennzeichnet, daß** die Gummieinfassung $G_1$ mit ihren axial inneren Ende bevorzugt in einem Abstand zur Äquatorialebene gelegen ist, der höchstens gleich dem Abstand ist, der die genannte Ebene vom axial inneren Ende des genannten Profils P1 trennt.

3. Reifen nach Anspruch 1, **dadurch gekennzeichnet, daß** die Gummieinfassung $G_1$ über den Rand der breitesten Scheitellage (33) derart umgeschlagen ist, daß die Enden der Verstärkungselemente, die die genannte Lage bilden, vollständig umhüllt werden.

4. Reifen nach einem der Ansprüche 1 bis 3, **dadurch gekennzeichnet, daß** die Dicke des Profils $P_1$, gemessen am Ende der am wenigsten breiten Lage (33), zwischen 30 und 80% der Gesamtdicke der gummihaltigen Mischung zwischen den Erzeugenden von Seilen jeweils der beiden Lagen (32, 33) liegt.

**Claims**

1. A tyre having a radial carcass reinforcement (1), which is anchored within each bead to at least one bead wire, and is surmounted by a crown reinforcement comprising at least two plies (32) and (33) of reinforcement elements, which are parallel to each other within each ply and are crossed from one ply (32) to the next (33), said two plies (32, 33) being of unequal axial widths, each edge of the ply (33) which is axially less wide of at least a pair (32, 33) of crossed plies being separated from the axially widest ply (32) of the same pair by a profiled element $P_1$ of rubber mix, the axially outer end of which is located at a distance from the equatorial plane of the tyre which is at least equal to the distance between said plane and the end of the widest ply (32), said profiled element $P_1$ itself being separated from the liner $C_2$ of the least wide ply (33) by an edging rubber $G_1$, the axially outer end of which is located at a distance from said plane which is at least equal to half the width of the least wide ply (33), **characterised in that** said profiled element $P_1$, said edging rubber $G_1$ and said liner $C_2$ have respectively secant moduli of elasticity under tension at 10% relative elongation $MP_1$, $MG_1$, $MC_2$ such that $MC_2 \geq MG_1 > MP_1$, the thickness of the edging rubber being at least equal to 15% of the total thickness of rubber mix between generatrices of cables respectively of the two plies (32, 33).

2. A tyre according to Claim 1, **characterised in that** the edging rubber $G_1$ will have its axially inner end preferably located at a distance from the equatorial plane which is at most equal to the distance between said plane and the axially inner end of said profiled element $P_1$.

3. A tyre according to Claim 1, **characterised in that** the edging rubber $G_1$ is turned up over the edge of the least wide crown ply (33), so as to coat completely the ends of reinforcement elements forming said ply.

4. A tyre according to one of Claims 1 to 3, **characterised in that** the thickness of the profiled element $P_1$, measured at the end of the least wide ply (33), is between 30 and 80% of the total thickness of rubber mix between generatrices of cables respectively of the two plies (32, 33).

FIG 1

FIG 2